# EUROPEAN PATENT SPECIFICATION

(11) **EP 4 000 407 B1**
(45) Date of publication and mention of the grant of the patent: **12.07.2023**
(21) Application number: 21208276.2
(22) Date of filing: 15.11.2021
(51) Int. Cl.: A23G 9/22, A23K 40/20, A23K 50/48, A23N 17/00, A23P 30/10, F25C 1/243, A23K 20/163, A23K 50/40

(54) **SILICONE HOLDER FOR MOULDING AND PREPARING FROZEN DOG FOOD**
SILIKONHALTER ZUM FORMEN UND ZUBEREITEN VON GEFRORENEN HUNDEFUTTERMITTELN
SUPPORT EN SILICONE POUR LE MOULAGE ET LA PRÉPARATION D'ALIMENTS GLACÉS POUR CHIENS

(30) Priority: 16.11.2020 BE 202005821
(43) Date of publication of application: 25.05.2022
(73) Proprietor: Pawesome bvba, 1080 Sint-Jans-Molenbeek (BE)
(72) Inventor: MOLENBERGHS, David, 1080 Sint-Jans-Molenbeek (BE); BRACKE, Tineke, 1080 Sint-Jans-Molenbeek (BE)
(74) Representative: Brantsandpatents bv

(56) References cited:
- EP-A1- 2 327 313
- EP-A1- 2 878 206
- EP-A2- 0 040 989
- US-A1- 2004 076 727

## Description

### TECHNICAL FIELD

The present invention relates to a silicone holder provided with one or more molds, suitable for molding and making a food product. Furthermore, the invention also relates to the use of this silicone holder, to a kit comprising one or more of these silicone holders and to an ice cream snack for dogs. In particular, the food product will be suitable for pets such as dogs.

### PRIOR ART

Frozen snacks, such as ice creams, are a favorite snack, even for many animals. Ice cream snacks can be bought ready-made in the supermarket, but a large part of the market potential also includes homemade snacks. To this end, the consumer will make the snack themselves on the basis of a few tools such as a mold and suitable ingredients and freeze and consume it when desired. In particular, this is often applied for water-based snacks.

On the one hand, homemade snacks offer practical advantages (for example, it prevents the ice cream from melting during transport from the store home), on the other hand, this solution is often cheaper for the consumer in the long run.

There are currently kits on the market that provide consumers with the necessities for making their own ice cream snack. Such kits often include an ingredient mix, sticks and a mold that together allow the customer to make a homemade ice cream snack. With the rise of food grade silicone, these molds are often made in a silicone mold. For example, EP 2 327 313, EP 2 878 206 and US 2004/076727 describe such silicone molds. The advantage of this is that they are very easy to demold. However, a problem with the known molds is that they are often unstable in filled form and the liquid or low-viscosity content therefore easily leaks out of the mold. This can be annoying, especially when the filled mold has to be transported, for example to a freezer. Positioning the sticks in the mold is also often problematic, as is the demolding of the final snack.

The present invention attempts to provide a solution for this.

Although the invention has application in the field of all ice cream snacks, the invention will be particularly suitable for making food products and snacks for dogs.

Dogs in particular, like many of their owners, are fond of sugary ice creams. Unlike cats, for example, dogs have the receptors that can identify sweet tastes. In addition, the ice creams provide good cooling, especially in hot times. Unfortunately, the ice cream snacks on the market for human consumption are less suitable for dogs. The recipe should be adapted to the needs of the dog. Ice cream snacks for dogs are known. For example, US 20050013899 describes an ice cream snack in which a therapeutic substance is incorporated. US4218482 in turn discloses a mixture which when frozen provides a chilled snack for dogs.

Thus, the present disclosure is also directed to providing a food product or snack such as an ice cream snack which is suitable for dogs, and which is easy to prepare. The present invention aims to find a solution for at least some of the above problems.

### SUMMARY OF THE INVENTION

The invention relates to a silicone holder according to claim 1. More specifically, the present invention describes a silicone holder provided with a holder plateau on which one or more molds are located, suitable for molding and making a food product, wherein each mold defines an internal volume by means of an upright wall, wherein the upright wall extends in a vertical position with respect to the holder plateau and wherein a longitudinal recess culminates in each mold, suitable for receiving at least a first part of a holder for the food product, the longitudinal recess being defined at least in part by upright walls on both sides of the recess and wherein the upright wall of the mold is interrupted at the mouth of the longitudinal recess by a vertical opening extending over the full height of the upright wall.

The silicone holder offers the advantage that it is more stable than the forms known in the market, and that the formed food product will demold more easily.

Preferred embodiments of this silicone holder are set forth in claims 2 to 8.

In a second aspect, the invention relates to a use according to claim 9. More particularly, the present invention describes the use of the aforementioned silicone holder for manufacturing a food product. In one embodiment, the product is a frozen product, such as an ice cream, preferably an ice cream snack for dogs.

In a further aspect, the invention relates to a kit according to claim 11. More specifically, the present invention describes a kit comprising one or more aforementioned silicone holders, one or more product holders and one or more mixtures comprising ingredients for making a food product. Preferred embodiments of this kit are set forth in claims 12 to 14.

### DETAILED DESCRIPTION OF THE DRAWINGS

**Figure 1** shows an embodiment of the silicone holder according to the present invention.
**Figure 2** shows an embodiment of the mold of the silicone holder according to the present invention.

### DETAILED DESCRIPTION OF THE INVENTION

There is a need for an improved holder for molding and making a food product such as an ice cream snack, which is more stable than hitherto known molds and in which a liquid or low-viscosity mixture does not leak from the device. The holder should also allow the product holder of the food product to be positioned in the food product in a simple manner. Finally, the molded ice cream snack with product holder must be easy to demold. The present invention offers a solution for this.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, with further preference approx. 5% or less, even with further preference approx. 1% or less, and even with further preference approx. 0.1% or less than and of the quoted value, insofar as such variations are applicable in the described invention. However, it must be understood that the value of a quantity used where the term 'about' or 'around' is used, is itself specifically disclosed.

The terms 'comprise', 'comprising', 'consist of', 'consisting of', 'provided with', 'have', 'having', 'include', 'including', 'contain', 'containing' are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

A "low-viscosity food product" in this document refers to a food product with a viscosity of less than 10⁵ mPa·s at a temperature of 20°C. The viscosity can be measured with any apparatus known in the art, for example with a Brookfield RVDV.

In a first aspect, the invention relates to a silicone holder provided with a holder plateau on which one or more molds are located, suitable for molding and making a food product, each mold defining an internal volume by means of an upright wall, wherein the upright wall extends in a vertical position relative to the holder plateau and wherein a longitudinal recess culminates in each mold, suitable for receiving at least a first part of a holder for the food product.

The upright wall extends in a vertical position with respect to the holder plateau and culminates in a free end, the free end of the upright wall defining an opening which is not in the same plane as the holder plateau.

As a result, the internal volume of the mold will be largely above the plane of the holder plateau and not below the plane of this holder plateau (as is the case in the already known silicone holders with molds). Unlike a holder in which the molds are recessed, the fact that the molds rise above the surface of the rest of the holder, as it were, will provide extra stability, especially when filled.

The longitudinal recess is delimited at least partly by upright walls on both sides of the recess and the upright wall of the mold is interrupted at the mouth of the longitudinal recess by a vertical opening extending over the full height of the upright wall. By providing such a vertical opening in the wall at the height of the recess for the product holder, it will be easier to demold the product together with the product holder once frozen. In other words, this increases the user-friendliness.

In one embodiment, a liquid or low-viscosity food product is poured into the mold and the liquid or low-viscosity food product is frozen in a subsequent step. This liquid or low-viscosity food product is restrained in the mold by means of the upright wall. The silicone holder makes it possible to move several molds at the same time and contributes to the stability of the mold or molds. Manufacturing the holder in silicone ensures that the food product can be more easily demolded once frozen.

A product holder for the food product makes it possible to hold the food product without making contact with the food product itself. This on the one hand avoids transfer of heat from the hand to the food product and on the other hand the food product can be held for another subject (for example a dog).

Suitable materials for the product holders include wood, plastic, metal, or composite material. In a preferred embodiment, the product holder is made of wood.

In one embodiment, the product holder is made of an edible material. The product holder can thus serve to hold the frozen food product while the latter is being consumed and can subsequently be eaten afterwards, when the food product has been consumed. In a preferred embodiment, the edible material is suitable for a dog. This can be any edible material known in the art, such as dog biscuits or a chew bone. In one embodiment, the product holder comprises additives with health-promoting properties, such as additives that reduce tartar. In one embodiment, the additives are selected from the group of fluorides, enzymes or abrasives. In one embodiment, the product holder comprises additives that contribute to fresh breath, such as green tea extract or eucalyptus oil.

The shape of the product holder can be freely chosen, provided it offers sufficient strength. In one embodiment, the product holder is a hollow cylinder or hollow beam. In another embodiment, the thickness of the product holder is limited, and it has a rectangular, round, oval, or irregular shape. The product holder can be provided with grip-enhancing elements on the surface, such as roughening or ribs, which increase the grip on the user. In one embodiment, the end that will be contained in the food product is wider and thicker than the other end of the product holder.

In one embodiment, the product holder has a length between 70 mm and 150 mm, more preferably between 80 mm and 120 mm, more preferably between 90 mm and 100 mm, more preferably 95 mm. In one embodiment, the product holder has a width of between 6 mm and 15 mm, more preferably between 7 mm and 13 mm, more preferably between 9 mm and 11 mm. In one embodiment, the width of the product holder varies in the longitudinal direction. In one embodiment, the end of the product holder that receives the product is wider than the other end. In one embodiment, the product holder has a thickness of between 2 mm and 8 mm, more preferably between 3 mm and 6 mm, more preferably between 4 mm and 6 mm. In one embodiment, the end of the product holder that receives the product is thicker than the other end. A product holder with such dimensions is sufficiently long so that the product holder on the one hand makes sufficient contact with the mixture in the mold and on the other hand can be held while consuming the food product. The width and thickness of the product holder also contribute to the ease with which the product holder can be held and further ensure that the product holder is sufficiently strong such that it does not break under the weight of the food product.

In a preferred form, the product holder is placed in the longitudinal recess of the silicone holder during the preparation of the product. In a preferred embodiment, a distal part of the product holder is herein provided in the internal volume of the mold. As a result, an anchoring of product holder and product will occur. Indeed, as soon as the mold is internally filled with a product mixture, this distal part of the product holder will be immersed in it. Freezing will create a temporary permanent connection between product and product holder.

In one embodiment, about 1/3 to 2/3, more preferably about 1/2 of the length of the product holder will be in the food product in the mold. In one embodiment, when the food product is frozen, the portion of the product holder contained in the food product is tightly enclosed by the food product, such that the product holder is able to move the food product in its entirety. The aforementioned ratio guarantees optimum anchoring of the product holder in the food product and benefits the firmness of the end product.

The vertical opening, which interrupts the upright wall of the mold at the mouth of the longitudinal recess and extends over the full height of the upright wall, makes it possible to create a passage for the product holder, through which the product holder and the frozen food product can be removed from the mold in a very simple manner. Bending the silicone holder makes it possible to widen the vertical opening, so that the product holder can be easily removed from the mold.

It is important that the vertical opening which interrupts the upright wall of the mold at the mouth of the longitudinal recess conforms to particular dimensions. On the one hand, the width of the vertical opening must be limited in order to prevent the liquid or low-viscosity food product from leaking out of the mold through the vertical opening. On the other hand, the width of the vertical opening must allow easy removal of the product holder from the longitudinal opening.

In one embodiment, the width of the vertical opening will be less than or equal to 2 mm, more preferably between 0.1 mm and 1 mm, more preferably between 0.1 and 0.5 mm, more preferably between 0.1 and 0.3 mm.

In one embodiment, the product holder will be positioned such that it extends to the center of the food product.

To this end, in a preferred embodiment, the longitudinal recess will be located on an elevation relative to the holder plateau. In one embodiment, the longitudinal recess is delimited on both sides by an upright wall. This prevents the product holder from losing its position, for example when the mold is filled with an ingredient mix. In one embodiment, the elevation has an edge along either side of the longitudinal opening. In one embodiment, this edge has a width of 1.5 to 2.5 mm, more preferably 2 mm. In one embodiment, this edge has a height of 1.5 to 2.5 mm, more preferably 2 mm. This edge projects above the underside of the longitudinal recess and prevents the product holder from sliding in the horizontal plane when it is placed in the longitudinal recess.

In one embodiment, the elevation has a height, measured from the holder plateau, between 5 mm and 8 mm, more preferably between 6 mm and 7 mm, more preferably 6.5 mm. In one embodiment, the elevation supports the product holder of the food product when placed in the longitudinal recess of the mold. In one embodiment, the elevation has a length of 6 mm to 11 mm, more preferably 7 mm to 10 mm, more preferably 8 mm to 9 mm, more preferably 8.5 mm, measured from the upright wall.

It is important that the longitudinal recess is of such a size to be able to place the product holder. In one embodiment, the longitudinal recess has a depth equal to or at most 5% greater than the thickness of the product holder, more preferably at most 4% greater than the thickness of the product holder, more preferably at most 3% greater than the thickness of the product holder, more preferably at most 2% greater than the thickness of the product holder, more preferably at most 1% greater than the thickness of the product holder, more preferably equal to the thickness of the product holder.

In one embodiment, the longitudinal recess has a width equal to or at most 7% greater than the width of the product holder, more preferably a width comprised between 4% and 6% greater than the width of the product holder.

When the longitudinal recess has such a dimension, on the one hand the longitudinal recess is sufficiently large to enable the product holder to be easily placed in the longitudinal opening, but on the other hand the longitudinal opening is narrow enough to enclose the product holder and prevent leakage of a liquid or low-viscosity food product from the mold.

The longitudinal recess may be suitable to receive the entire product holder, or only part of it. In one embodiment, only the distal portion of the product holder is received in the longitudinal recess, the unsupported portion being cantilevered. In another embodiment, the recess will extend over the holder plateau and have a length suitable for fully receiving the product holder.

The upright wall of the mold defines an internal volume, whereby the mold volume will determine the dimensions of the product.

In one embodiment, the height of the upright wall except for at the longitudinal recess and the vertical opening, measured from the plateau of the holder, is comprised between 15 mm and 20 mm, more preferably comprised between 16 and 19 mm, more preferably between 16.5 and 17.5 mm. Such a height of the wall makes it possible to define a suitable volume in the mold.

In one embodiment the mold has a content between 30 mm³ and 80 mm³ and the total content of the different molds in the silicone holder is less than 220 mm³. In one embodiment, the content of the mold depends on the number of molds per silicone holder. In one embodiment, the silicone holder comprises 1 to 6 molds. In a preferred embodiment, the silicone holder comprises 3 molds. In a further preferred embodiment, the silicone holder comprises 3 molds and the molds have a content between 60 mm³ and 80 mm³, more preferably between 62.5 mm³ and 77.5 mm³, more preferably between 65 mm³ and 75 mm³, more preferably between 67.5 mm³ and 70 mm³. In a preferred embodiment, the silicone holder comprises 4 molds. In a further preferred embodiment, the silicone holder comprises 4 molds and the molds have a content between 40 mm³ and 60 mm³, more preferably between 42.5 mm³ and 57.5 mm³, more preferably between 45 mm³ and 55 mm³, more preferably between 50 mm³ and 53 mm³. In a preferred embodiment, the silicone holder comprises 5 molds. In a further preferred embodiment, the silicone holder comprises 5 molds and the molds have a content between 30 mm³ and 50 mm³, more preferably between 32.5 mm³ and 47.5 mm³, more preferably between 35 mm³ and 45 mm³, more preferably between 39 mm³ and 42.5 mm³.

In one embodiment, the width of the silicone holder is between 120 mm and 210 mm. In one embodiment, the length of the silicone holder is between 180 mm and 270 mm. The mold can have any shape. In one embodiment, the mold is in the form of a circle, an ellipse, a triangle, a quadrangle (e.g., a rectangle, a square, a trapezoid or a parallelogram), a pentagon, a hexagon, a heptagon, an octagon. In one embodiment, the mold is in the form of a figure. In a preferred embodiment, the mold is in the shape of a dog's paw.

In one embodiment, the holder is made of food grade silicone. Products made of silicone are easy to use. For example, they are lighter than metal variants and silicone holders are easier to demold, as they are bendable. Silicone holders can often be reused without damage. That means less waste and a long lifespan. Furthermore, silicones are inert and under normal circumstances do not react with other substances such as food and drink. In addition, silicones are made from harmless, non-toxic materials. For example, silicones do not contain BPA, plasticizers, PVC or other harmful materials. Silicone is not porous, making it very difficult for bacteria to penetrate. Another advantage of silicone products is that they are easy to clean. For example, silicone can be washed, boiled or cleaned in the dishwasher. Silicone is also resistant to extreme temperatures, allowing it to be placed in the refrigerator or freezer and in the oven or microwave. In addition, this silicone can be recycled and is considered non-hazardous waste. Food grade silicone is suitable to be used for products that come into contact with food, such a product is for example a mold, suitable for molding and making a food product such as an ice cream snack.

In one embodiment, the aforementioned silicone holder is used for manufacturing a food product, preferably a food product for pets such as dogs. In one embodiment, the food product is a frozen product, such as an ice cream, preferably an ice cream snack for dogs. In a preferred embodiment, the food product is provided with a product holder as described above for holding the food product. In a further preferred embodiment, the food product is provided with an edible product holder as described above. The product holder can thus serve to hold the frozen food product while the latter is being consumed and can subsequently be eaten afterwards, when the food product has been consumed. In a further preferred embodiment, the edible material from which the product holder is manufactured is suitable for a dog.

The silicone holder according to the present invention is suitable for placing in the freezer, thus obtaining a frozen product.

In a further aspect of the invention, the present invention provides a kit comprising one or more of the aforementioned silicone holders, one or more product holders and one or more mixtures comprising ingredients for making a food product. In one embodiment, the kit is suitable for making an ice cream snack, preferably an ice cream snack for dogs. In a preferred embodiment, the one or more product holders are as described above. Preferably, these product holders are made of an edible material as described above.

While the kit can be applied in the field of all ice cream snacks, the mixture will be particularly suitable for making snacks for dogs. Dogs love sugary ice creams. Unlike cats, for example, dogs have the receptors that can identify sweet tastes. In addition, the ice creams provide good cooling, especially in hot times. These ice cream snacks can be bought ready-made in the supermarket, but a large part of the market potential also includes homemade snacks.

Such a kit has the advantage that all components for manufacturing an ice cream snack are contained in one holder. On the one hand, this is easy for the logistical distribution of the various components, but it also offers advantages for the consumer. These components can be easily bought together (in the physical store or online) and after the purchase the consumer can immediately get to work, since all components for manufacturing the ice cream snack are included in the kit.

Since the silicone holder according to the present invention can often be reused without being damaged, it is not necessary to buy a new silicone holder each time, but it is also possible to buy a supplement pack with one or more product holders and one or more mixtures comprising ingredients for making a food product. In a preferred embodiment, the one or more product holders are made of an edible material. In a preferred embodiment, the food product is a frozen product, such as an ice cream, preferably an ice cream snack for dogs.

In one embodiment, the invention comprises a kit with a silicone holder comprising one or more molds suitable for molding and making a food product, one or more product holders and one or more mixtures comprising ingredients for making a food product, wherein the one or more product holders are made of an edible material. In a further preferred embodiment, the edible material from which the product holder is manufactured is suitable for a dog. This can be any edible material known in the art, such as dog biscuits or a chew bone. In one embodiment, the product holder comprises additives with health-promoting properties, such as additives that reduce tartar. In one embodiment, the additives are selected from the group of fluorides, enzymes or abrasives. In one embodiment, the product holder comprises additives that contribute to fresh breath, such as green tea extract or eucalyptus oil.

In one embodiment, the mixture is a water-soluble powder. By adding a certain amount of water and dissolving this powder in the water, a suitable mixture can be obtained, which can then be poured into the mold or molds of the silicone holder.

In another embodiment, it is no longer necessary to add water, but the mixture is a ready-to-use liquid mix. By providing a ready-to-use mix, it is no longer necessary to measure an amount of water, add it and let the powder dissolve in this amount of water. Such a ready-to-use liquid mix is therefore timesaving as it can be poured immediately into the molds of the silicone holder. The ready-to-use mix may be packaged in any recipient known in the art, such as a plastic bag or box, a Tetra Brik pack, a plastic or metal bottle. In one embodiment, the package size is between 50 ml and 500 ml, more preferably between 75 ml and 250 ml, more preferably between 90 ml and 150 ml.

In one embodiment, the mixture comprises at least 50%, more preferably at least 70% of one or more sugars or sugar substitutes.

In one embodiment, the mixture comprises sweeteners, such as sugars or sugar substitutes. In one embodiment, the mixture comprises at least 50%, more preferably at least 70% of a sugar such as glucose or fructose. In a preferred embodiment, the mixture comprises at least 50%, more preferably at least 70% of maltodextrin as a sweetener. Maltodextrin consists of complex polymers of glucose and tastes moderately sweet. In one embodiment, the mixture comprises at least 50%, more preferably at least 70% of oligofructose. Oligofructose has prebiotic properties and can stimulate the growth of bifidobacteria. For certain dogs, for example puppies, this can be beneficial.

In one embodiment, a binder is added to the mixture, such as starch, a polysaccharide of glucose. In a preferred embodiment, the mixture comprises tapioca starch derived from manioc. In one embodiment, a thickener is added to the mixture. This thickener is often a polysaccharide and can bind water, making it able to thicken the final product. In a preferred embodiment, guar gum is added as a thickener to the mixture.

In a preferred embodiment, the mixture is free of grains, lactose and fat. In one embodiment, the mixture comprises less than 5% protein, preferably less than 2.5% protein, preferably less than 1% protein. In one embodiment, the mixture comprises less than 5% fat, preferably less than 2.5% fat, preferably less than 1% fat. In one embodiment, the mixture includes less than 5% crude fiber, preferably less than 2.5% crude fiber, preferably less than 1% crude fiber. In one embodiment, the mixture comprises less than 10% crude ash, preferably less than 5% crude ash, preferably less than 3% crude ash. In one embodiment, the mixture comprises between 1% and 10% moisture, more preferably between 2% and 8% moisture, more preferably between 3% and 6% moisture.

In one embodiment, the mixture exists in different flavor variants. In one embodiment, the mixture has a strawberry flavor. In another embodiment, the mixture has an apricot flavor. In another embodiment, the mixture has a pineapple flavor. In yet another embodiment, the mixture has a peanut flavor. In yet another embodiment, the mixture has a coconut flavor. In yet another embodiment, the mixture has a watermelon flavor. In yet another embodiment, the mixture has an apple flavor. In yet another embodiment, the mixture has a banana flavor. In yet another embodiment, the mixture has a blueberry flavor. It goes without saying that other flavor variants are also possible.

A further aspect of the disclosure relates to an ice cream snack for dogs, wherein the ice cream snack consists of a food product obtained by freezing a liquid mixture in a mold and a product holder which is at least partially anchored in the frozen food product, the product holder made of an edible material.

The mixture may be as described above. The edible product holder may be as described above. The product holder thus serves on the one hand to hold the frozen food product while the latter is being consumed and can subsequently be eaten afterwards, when the food product has been consumed. In a preferred embodiment, the edible material from which the product container is made is suitable for a dog. This can be any edible material known in the art, such as dog biscuits or a chew bone. In one embodiment, the product holder comprises additives with health-promoting properties, such as additives that reduce tartar. In one embodiment, the additives are selected from the group of fluorides, enzymes or abrasives. In one embodiment, the product holder comprises additives that contribute to fresh breath, such as green tea extract or eucalyptus oil.

In what follows, the invention is described by way of non-limiting examples illustrating the invention, and which are not intended to and should not be interpreted as limiting the scope of the invention.

### EXAMPLE

To make an ice cream snack for dogs, 315 ml of water is added to 105 g of water-soluble powder with a strawberry flavor. The water-soluble powder is packed in a cylindrical cardboard packaging and dissolves quickly in water. The dissolved powder is then poured into the various molds of the silicone holder and the product holders are placed in the longitudinal recesses of the molds. This silicone holder can then be placed in a freezer to allow the mixture to freeze in the molds. The silicone holder offers the advantage that it is more stable than the known molds in the market, so that the mixture does not leak from the molds. After freezing the mixture, the ice cream snack can be easily demolded by bending the silicone holder and removing the product holder from the longitudinal recess through the vertical opening.

### DETAILED DESCRIPTION OF THE DRAWINGS

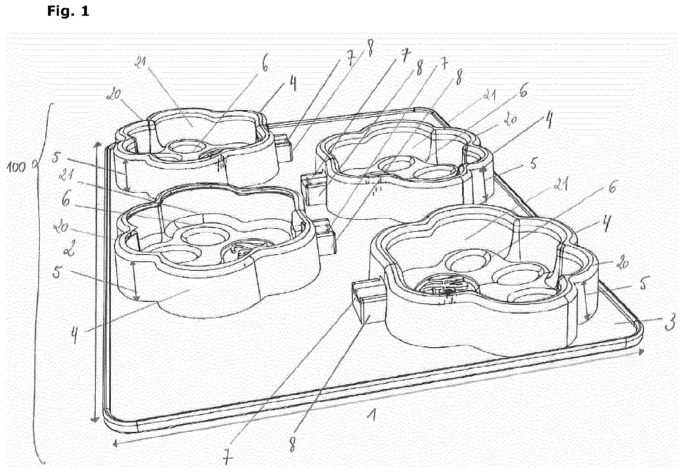

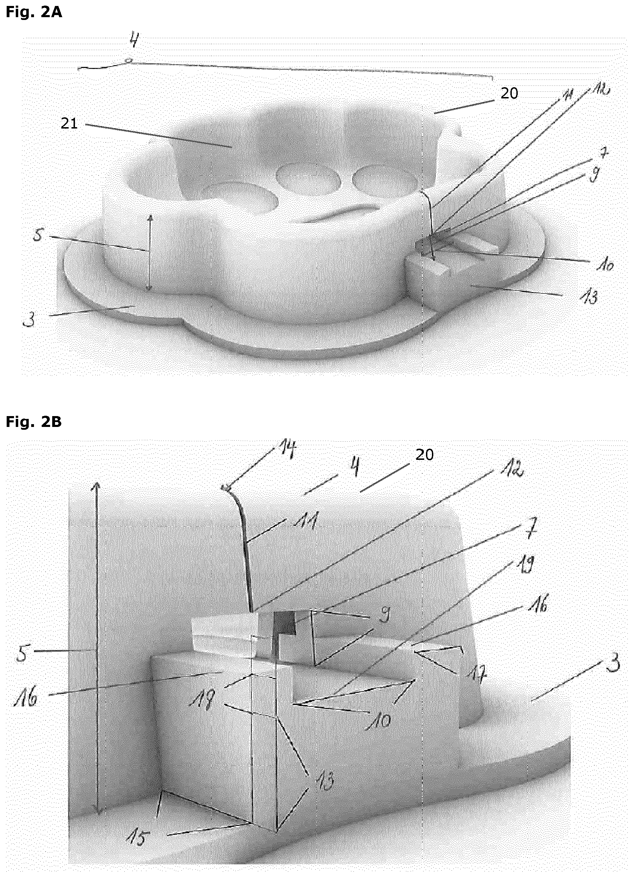

**Figure 1** shows an embodiment of the silicone holder **100** of the present invention. The silicone holder in this embodiment **100** has a width **1** of about 166 mm and a length **2** of about 225 mm and is provided with a holder plateau **3** on which there are 4 molds **4** for molding and making a food product (not shown) for dogs. The silicone holder is made of food grade silicone, suitable to be used for products that come into contact with food. A liquid or low-viscosity mixture (not shown), such as an ice cream mix, may be poured into the molds **4** and the silicone holder may subsequently be placed in a freezer. The silicone holder makes it possible to move several molds **4** at the same time and contributes to the stability of the molds. In the embodiment as shown in figure 1, the molds **4** have the shape of a paw with paw pads. It goes without saying that any shape is possible in practice. Each of the molds is formed by an upright wall **5** which extends in a vertical position with respect to the holder plateau **3** and culminates in a free end **20** wherein the free end **20** of the upright wall **5** defines an opening **21** which is not in the same plane as the holder plateau **3.** In the example of figure 1, the upright wall is approximately 16.85 mm. An internal volume **6** is defined by means of the upright wall **5.** In the example of figure 1, it is approximately 52 mm³, but it goes without saying that other volumes are also possible. The upright wall **5** is interrupted by a longitudinal recess **7** in which a part of a product holder (not shown) such as a stick for the ice cream snack (not shown) can be placed. The longitudinal recess **7** is located on an elevation **8** with respect to the holder plateau **3.** In the example of figure 1 as well as in figure 2, the longitudinal recesses will only be suitable for receiving a part of the product holder, wherein the unsupported part will be cantilevered. In another unshown embodiment, the recess will extend over the holder plateau **3** and have a length that is suitable for the full inclusion of the product holder.

**Figure 2A** shows a detail drawing of an embodiment of a mold **4** of the silicone holder according to the present invention. The mold **4** is formed by an upright wall **5** which extends in a vertical position with respect to the holder plateau **3** and culminates in a free end **20** wherein the free end **20** of the upright wall **5** defines an opening **21** which is not in the same plane as the holder plateau **3.** The upright wall **5** is interrupted by a longitudinal recess **7** in which a part of a product holder (not shown), such as a stick for an ice cream snack (not shown) can be placed. The longitudinal recess **7** has a depth **9** of 4 mm and a width **10** of 10 mm. The product holder of the food product has dimensions that allow it to be placed in the longitudinal recess **7** of the mold **4,** leaving little clearance between the product holder and the mold **4,** so that leakage of a liquid or low-viscosity product mix (not shown) from the mold **4** via the longitudinal recess **7** is obstructed when the product holder is placed in the longitudinal recess **7.** A portion of the product holder is placed in the mold **4,** where it makes contact with the product mix. After freezing, this part of the product holder that is contained in the product mix will be tightly enclosed by the product mix. The upright wall **5** of the mold **4** is provided with a vertical opening **11** which interrupts the upright wall **5** at the mouth **12** of the longitudinal recess **7** and extends over the full height of the upright wall **5,** whereby a passage is created for the product holder. The product holder and the frozen product mix can hereby be removed from the mold **4.** Since it is desirable for the product holder to be positioned in the center of the frozen product mix, the longitudinal recess **7** is located on an elevation **13** with respect to the holder plateau **3.** In the example of figure 2, this elevation is 6.5 mm high.

**Figure 2B** shows a detail view of an embodiment of the mold **4** of the silicone holder according to the present invention. The mold **4** is formed by an upright wall **5** which extends in a vertical position with respect to the holder plateau **3** and culminates in a free end **20.** The upright wall is interrupted by a longitudinal recess **7** in which a part of a product holder, such as a stick for an ice cream snack, can be placed. The longitudinal recess **7** has a depth **9** of 4 mm and a width **10** of 10 mm. The upright wall **5** of the mold **4** is further provided with a vertical opening **11.** In the example of figure 2B this vertical opening has a width **14** of 0.3 mm. The vertical opening **11** interrupts the upright wall **5** at the mouth **12** of the longitudinal recess **7** and extends over the full height of the upright wall **5.** The longitudinal recess **7** is located on an elevation **13** with respect to the holder plateau **3.** This elevation **13** supports the product holder when it is placed in the longitudinal recess **7** of the mold **4** and has a length **15** of 8.5 mm, measured from the upright wall **5.** The elevation **13** has an edge **16** along both sides of the longitudinal opening **7** with a width **17** of 2 mm. This edge **16** has a height **18** of 2 mm, so that it projects above the underside **19** of the longitudinal recess **7** and thus defines a portion of the product holder when it is placed in the longitudinal recess **7.**

## Claims

1. A silicone holder (100) provided with a holder plateau (3) on which one or more molds (4) are located, suitable for molding and making a food product, wherein each mold (4) defines an internal volume (6) by means of an upright wall (5), wherein the upright wall (5) extends in a vertical position with respect to the holder plateau (3), wherein a longitudinal recess (7) culminates in each mold (4), suitable for receiving at least a first part of a holder for the food product, wherein the longitudinal recess (7) is defined at least in part by the upright walls (5) on both sides of the recess (7) and wherein the upright wall (5) of the mold (4) is interrupted at the mouth (12) of the longitudinal recess (7) by a vertical opening (11) extending over the full height of the upright wall (5), **characterized in that** the upright wall (5) culminates in a free end (20), wherein the free end (20) of the upright wall (5) defines an opening (21) which is not in the same plane as the holder plateau (3), and **in that** the internal volume (6) of the one or more molds (4) is above the plane of the holder plateau (3).

2. The silicone holder (100) according to claim 1, wherein the vertical opening (11) has a width (14) less than or equal to 2 mm, more preferably between 0.1 mm and 1 mm.

3. The silicone holder (100) according to any of the previous claims, **characterized in that** the longitudinal recess (7) is located on an elevation (8, 13) relative to the holder plateau (3).

4. The silicone holder (100) according to claim 3, wherein the elevation (8, 13) has a height, measured from the holder plateau (3), between 5 mm and 8 mm.

5. The silicone holder (100) according to any of the previous claims, wherein the longitudinal recess (7) has a depth (9) equal to or at most 5% greater than the thickness of the product holder and a width (10) equal to or at most 7% greater than the width of the product holder.

6. The silicone holder (100) according to any of the previous claims, wherein the height of the upright wall (5), measured from the plateau of the holder (3), is between 15 mm and 20 mm, except for at the longitudinal recess (7) and the vertical opening (11).

7. The silicone holder (100) according to any of the previous claims, comprising 1 to 6 molds (4).

8. The silicone holder (100) according to any of the previous claims, wherein the holder is made of food grade silicone.

9. Use of the silicone holder (100) according to any of the previous claims 1-8, for manufacturing a food product, preferably a food product for pets such as dogs.

10. The use according to claim 9, wherein the food product is a frozen product, such as an ice cream, preferably an ice cream snack for dogs.

11. A kit comprising one or more silicone holders (100) according to any of the previous claims 1-8, one or more product holders and one or more mixtures comprising ingredients for making a food product.

12. The kit according to claim 11, **characterized in that** the mixture is a water-soluble powder or a ready-to-use liquid mixture.

13. The kit according to any of the previous claims 11-12, **characterized in that** the mixture comprises at least 50%, more preferably at least 70% of one or more sugars or sugar substitutes.

14. The kit according to any of the previous claims 11-13, **characterized in that** the holder for the food product is made of an edible material.

## Patentansprüche

1. Silikonhalter (100), der mit einem Halterplateau (3) versehen ist, auf dem sich ein oder mehrere Formwerkzeuge (4) befinden, die zum Formen und Herstellen eines Nahrungsmittelprodukts geeignet sind, wobei jedes Formwerkzeug (4) mittels einer aufrechten Wandung (5) ein Innenvolumen (6) definiert, wobei sich die aufrechte Wandung (5) in einer vertikalen Position in Bezug auf das Halterplateau (3) erstreckt, wobei eine längliche Vertiefung (7) in jedes Formwerkzeug (4) mündet, die zum Aufnehmen mindestens eines ersten Teils eines Halters für das Nahrungsmittelprodukt geeignet ist, wobei die längliche Vertiefung (7) mindestens teilweise durch die aufrechten Wandungen (5) auf beiden Seiten der Vertiefung (7) definiert ist und wobei die aufrechte Wandung (5) des Formwerkzeugs (4) an der Mündung (12) der länglichen Vertiefung (7) durch eine vertikale Öffnung (11) unterbrochen ist, die sich über die gesamte Höhe der aufrechten Wandung (5) erstreckt, **dadurch gekennzeichnet, dass** die aufrechte Wandung (5) in einem freien Ende (20) mündet, wobei das freie Ende (20) der aufrechten Wandung (5) eine Öffnung (21) definiert, die nicht in der gleichen Ebene liegt wie das Halterplateau (3), und dadurch, dass das Innenvolumen (6) des einen oder der mehreren Formwerkzeuge (4) über der Ebene des Halterplateaus (3) liegt.

2. Silikonhalter (100) nach Anspruch 1, wobei die vertikale Öffnung (11) eine Breite (14) von kleiner oder gleich 2 mm, bevorzugter zwischen 0,1 mm und 1mm, aufweist.

3. Silikonhalter (100) nach einem der vorhergehenden Ansprüche, **dadurch gekennzeichnet, dass** sich die längliche Vertiefung (7) auf einer Erhöhung (8, 13) relativ zu dem Halterplateau (3) befindet.

4. Silikonhalter (100) nach Anspruch 3, wobei die Erhöhung (8, 13), gemessen von dem Halterplateau (3) ausgehend, eine Höhe zwischen 5 mm und 8 mm aufweist.

5. Silikonhalter (100) nach einem der vorhergehenden Ansprüche, wobei die längliche Vertiefung (7) eine Tiefe (9) aufweist, die gleich oder höchstens 5 % größer als die Dicke des Produkthalters ist, und eine Breite (10), die gleich oder höchstens 7 % größer als die Breite des Produkthalters ist.

6. Silikonhalter (100) nach einem der vorhergehenden Ansprüche, wobei die Höhe der aufrechten Wandung (5), gemessen von dem Halterplateau (3) ausgehend, zwischen 15 mm und 20 mm beträgt, außer an der länglichen Vertiefung (7) und der vertikalen Öffnung (11).

7. Silikonhalter (100) nach einem der vorhergehenden Ansprüche, 1 bis 6 Formwerkzeuge (4) umfassend.

8. Silikonhalter (100) nach einem der vorhergehenden Ansprüche, wobei der Halter aus lebensmittelechtem Silikon besteht.

9. Verwendung des Silikonhalters (100) nach einem der vorhergehenden Ansprüche 1-8 zum Herstellen eines Nahrungsmittelprodukts, vorzugsweise eines Nahrungsmittelprodukts für Haustiere wie etwa Hunde.

10. Verwendung nach Anspruch 9, wobei das Nahrungsmittelprodukt ein Tiefkühlprodukt wie etwa eine Eiscreme ist, vorzugsweise ein Eiscreme-Snack für Hunde.

11. Set, einen oder mehrere Silikonhalter (100) nach einem der vorhergehenden Ansprüche 1-8, einen oder mehrere Produkthalter und eine oder mehrere Mischungen umfassend, die Zutaten zur Herstellung eines Nahrungsmittelprodukts umfassen.

12. Set nach Anspruch 11, **dadurch gekennzeichnet, dass** die Mischung ein wasserlösliches Pulver oder eine gebrauchsfertige flüssige Mischung ist.

13. Set nach einem der vorhergehenden Ansprüche 11-12, **dadurch gekennzeichnet, dass** die Mischung mindestens 50 %, bevorzugter mindestens 70 %, eines oder mehrerer Zucker oder Zuckerersatzstoffe umfasst.

14. Set nach einem der vorhergehenden Ansprüche, 11-13, **dadurch gekennzeichnet, dass** der Halter für das Nahrungsmittelprodukt aus einem essbaren Material besteht.

## Revendications

1. Support en silicone (100) doté d'un plateau de support (3) sur lequel un ou plusieurs moules (4) sont situés, approprié pour le moulage et la fabrication d'un produit alimentaire, dans lequel chaque moule (4) définit un volume interne (6) au moyen d'une paroi verticale (5), dans lequel la paroi verticale (5) s'étend dans une position verticale par rapport au plateau de support (3) dans lequel un évidement longitudinal (7) culmine dans chaque moule (4), approprié pour recevoir au moins une première partie d'un support pour le produit alimentaire, dans lequel l'évidement longitudinal (7) est défini au moins en partie par les parois verticales (5) sur les deux côtés de l'évidement (7) et dans lequel la paroi verticale (5) du moule (4) est interrompue au niveau de l'embouchure (12) de l'évidement longitudinal (7) par une ouverture verticale (11) s'étendant sur la hauteur entière de la paroi verticale (5), **caractérisé en ce que** la paroi verticale (5) culmine dans une extrémité libre (20), dans lequel l'extrémité libre (20) de la paroi verticale (5) définit une ouverture (21) qui n'est pas dans le même plan que le plateau de support (3) ; et **en ce que** le volume interne (6) des un ou plusieurs moules (4) est au-dessus du plan du plateau de support (3).

2. Support en silicone (100) selon la revendication 1, dans lequel l'ouverture verticale (11) a une largeur (14) inférieure ou égale à 2 mm, de manière davantage préférée entre 0,1 mm et 1 mm.

3. Support en silicone (100) selon l'une quelconque des revendications précédentes, **caractérisé en ce que** l'évidement longitudinal (7) est situé sur une élévation (8, 13) par rapport au plateau de support (3).

4. Support en silicone (100) selon la revendication 3, dans lequel l'élévation (8, 13) a une hauteur, mesurée à partir du plateau de support (3), entre 5 mm et 8 mm.

5. Support en silicone (100) selon l'une quelconque des revendications précédentes, dans lequel l'évidement longitudinal (7) a une profondeur (9) égale à ou au plus 5 % supérieure à l'épaisseur du support de produit et une largeur (10) égale à ou au plus 7 % supérieure à la largeur du support de produit.

6. Support en silicone (100) selon l'une quelconque des revendications précédentes, dans lequel la hauteur de la paroi verticale (5), mesurée à partir du plateau du support (3), est entre 15 mm et 20 mm, sauf au niveau de l'évidement longitudinal (7) et de l'ouverture verticale (11).

7. Support en silicone (100) selon l'une quelconque des revendications précédentes, comprenant 1 à 6 moules (4).

8. Support en silicone (100) selon l'une quelconque des revendications précédentes, dans lequel le support est fait de silicone de qualité alimentaire.

9. Utilisation du support en silicone (100) selon l'une quelconque des revendications 1 à 8 précédentes, pour la fabrication d'un produit alimentaire, de préférence un produit alimentaire pour animaux de compagnie tels que des chiens.

10. Utilisation selon la revendication 9, dans laquelle le produit alimentaire est un produit congelé, tel qu'une crème glacée, de préférence un en-cas de crème glacée pour chiens.

11. Kit comprenant un ou plusieurs supports en silicone (100) selon l'une quelconque des revendications 1 à 8 précédentes, un ou plusieurs supports de produit et un ou plusieurs mélanges comprenant des ingrédients pour fabriquer un produit alimentaire.

12. Kit selon la revendication 11, **caractérisé en ce que** le mélange est une poudre soluble dans l'eau ou un mélange liquide prêt à l'emploi.

13. Kit selon l'une quelconque des revendications 11 et 12 précédentes, **caractérisé en ce que** le mélange comprend au moins 50 %, de manière davantage préférée au moins 70 % d'un ou plusieurs sucres ou substituts de sucre.

14. Kit selon l'une quelconque des revendications 11 à 13 précédentes, **caractérisé en ce que** le support pour le produit alimentaire est fait d'un matériau comestible.
